# EUROPÄISCHE PATENTSCHRIFT

(11) **EP 1 521 712 B1**
(45) Veröffentlichungstag und Bekanntmachung des Hinweises auf die Patenterteilung: **18.07.2007**
(21) Anmeldenummer: 03732453.0
(22) Anmeldetag: 24.05.2003
(51) Int. Cl.: B65G 45/08, F16H 57/05, F16H 7/18, F16N 7/00

(54) **SCHMIEREINRICHTUNG ZUM ABSCHMIEREN WANDERNDER SCHMIERSTELLEN, WIE SOLCHEN AN EINEM BAND**
LUBRICATING DEVICE FOR LUBRICATING MIGRATING LUBRICATING POINTS LIKE THOSE ON A CONVEYOR BELT
DISPOSITIF DE LUBRIFICATION POUR LUBRIFIER DES POINTS DE LUBRIFICATION MIGRANTS, DU TYPE DE CEUX SITUES SUR UNE BANDE

(30) Priorität: 17.07.2002 DE 20210758 U
(43) Veröffentlichungstag der Anmeldung: 13.04.2005
(73) Patentinhaber: Lincoln GmbH, 69190 Walldorf (DE)
(72) Erfinder: FLEIGE, Axel, 76698 Ubstadt-Weier (DE)
(74) Vertreter: Keil, Rainer A.
(86) Internationale Anmeldenummer: PCT/EP2003/005436
(87) Internationale Veröffentlichungsnummer: WO 2004/007321

(56) Entgegenhaltungen:
- EP-A- 0 590 453
- DE-A- 10 014 325
- DE-A- 19 507 770
- DE-A- 19 813 882
- US-A- 4 844 203
- US-A- 5 372 242

## Beschreibung

Die Erfindung betrifft eine Schmiereinrichtung zum Abschmieren wandernder Schmierstellen, wie solchen an einem Band oder dgl., insbesondere an einem Rollen- oder Kettenband, mit einem Schmierstoffapplikator, der wenigstens einen Schmierstoffauslass aufweist, und einer dem Schmierstoffapplikator zugeordneten Bandführungseinrichtung, durch welche das Band oder dgl. während des Schmiervorgangs geführt wird.

Die Versorgung von Antriebs- oder Förderketten mit Schmierstoff erfolgt herkömmlicherweise durch zwei unterschiedliche Verfahren. Zum einen ist die kontinuierliche Auftragung von Schmierstoff auf Antriebs- oder Förderketten mit einem Pinsel bekannt. Alternativ können Schmierstoffe kontinuierlich oder getaktet mittels Spritzdüsen oder Tropfölern aufgetragen werden. In beiden Fällen wird als Schmierstoff hauptsächlich Kettenschmieröl oder in geringem Umfang auch Fließfett verwendet. Aufgrund der höheren Viskosität ist der Einsatz von Fett als Schmierstoff bei diesen beiden Verfahren nicht möglich.

Die Schmierung von Antriebs- und Förderketten oder dgl. Bändern erfolgt immer im Untertrum, d.h. in dem nicht die Kraft übertragenden Bereich des Bandes. Bei stark belasteten Ketten oder Bändern ist daher sowohl bei einer Auftragung des Schmierstoffs mit einem Pinsel oder über Spritzdüsen bzw. Tropföler eine Führung des Bandes erforderlich, da die Kette bzw. das Band im Anfahrbetrieb oder bei Geschwindigkeitsänderungen "schlagen". Dies führt bei Pinselschmierung zu starkem Verschleiß, wodurch die Standzeiten der Pinsel stark beschränkt werden. Bei der Auftragung von Schmiermittel über Spritzdüsen oder Tropföler bewirken die Auslenkungen des Bandes, dass die Schmierstellen, z.B. die Laschen-Laschen-Paarungen oder Laschen-Rollen-Paarungen von Ketten, von dem Schmierstoff nicht getroffen werden. Dies führt zu einer unzureichenden Versorgung der Schmierstellen mit Schmierstoff.

Aus der DE 198 13 882 A1 ist eine Kettenführung mit einem eine Kette umhüllenden Profil bekannt, in das über Ölzuführungskanäle Öl zur Schmierung der Kette zugeführt wird. In dem Profil sind Tropfnoppen und eine Abtropfkante vorgesehen, um die Kette durch eine Tropfschmierung zu schmieren.

Darüber hinaus ist in stark schmutzbelasteter Umgebung das Problem bekannt, dass sich an dem mit Schmierstoff benetzten Band Schmutz ansammelt, der z.B. in unerwünschter Weise auf das Fördergut und Kettenräder oder dgl. übertragen wird.

Weiter ist aus der DE 195 07 770 A1 ein Kettenspanner mit einem Gleitbelagkörper bekannt, der aus einem verschleißfesten Kunststoff besteht.

Es ist daher die Aufgabe der vorliegenden Erfindung, eine Schmiereinrichtung der eingangs genannten Art bereitzustellen, die bei hoher Standzeit ein zuverlässiges Auftragen von beliebigen Schmierstoffen, wie beispielsweise Schmieröl, Fließfett oder Fett, ermöglicht.

Diese Aufgabe wird erfindungsgemäß z.B. dadurch gelöst, dass der wenigstens einen Schmierstoffauslass aufweisende Schmierstoffapplikator als Kontaktschmiereinheit ausgebildet ist und dass der Schmierstoffapplikator und/oder die Bandführungseinrichtung aus einem hochverschleißfesten Kunststoff bestehen oder wenigstens an ihren mit dem Band oder dgl. in Kontakt tretenden Bereichen mit einem hochverschleißfesten Kunststoff beschichtet sind. Dabei definieren der Schmierstoffapplikator und die Bandführungseinrichtung einen sich in Längsrichtung der Schmierstellenbewegung erstreckenden Führungskanal, dessen Querschnitt an die Geometrie des Bandes derart angepasst ist, dass an dem Band anhaftender Schmutz beim Eintritt des Bandes in den Führungskanal abgestreift wird, wobei das Band mit einer Spielpassung in dem Führungskanal geführt ist.

Mittels einer so gestalteten Kontaktschmiereinheit lassen sich verschiedene Schmierstoffe, wie Schmieröle oder Fließfette, aber auch Fette mit höherer Viskosität auf wandernde Schmierstellen von Bändern, Ketten oder dgl. durch Zwangsführung auftragen. Durch die dem Schmierstoffapplikator zugeordnete Bandführungseinrichtung wird dabei vermieden, dass die Schmierstellen des Bandes beispielsweise im Anfahrbetrieb oder bei Geschwindigkeitsänderungen des Bandes von der Kontaktschmiereinheit soweit entfernt werden, dass der Schmiervorgang beeinträchtigt wird. Da sowohl der Schmierstoffapplikator als auch die Bandführungseinrichtung aus einem hochverschleißfesten Kunsttoff bestehen oder mit diesem beschichtet sind, ist die gesamte Schmiereinrichtung besonders verschleißarm, so dass diese betriebssicher und mit langen Standzeiten arbeitet.

Durch den das Band oder dgl. aufnehmenden Führungskanal werden sowohl vertikale als auch horizontale Bewegungen des Bandes in einer von der Schmierstellenbewegung unterschiedlichen Richtung in festgelegten Grenzen gehalten, so dass ein Schmierstoffauftrag durch Kontakt des Bandes mit dem den wenigstens einen Schmierstoffauslass aufweisenden Schmierstoffapplikator sichergestellt wird.

Da der Querschnitt des Führungskanals an die Geometrie des Bandes angepasst ist und das Band dabei in dem Führungskanal mit einer Spielpassung geführt ist, kann durch die enfindungsgemäße Schmiereinrichtung das Band oder dgl. gleichzeitig gereinigt werden. An dem Band anhaftender Schmutz, wie beispielsweise Glassplitter, Späne, etc., werden beim Eintritt des Bandes in den Führungskanal abgestreift. Im Gegensatz zu einer Pinselschmierung, bei der ebenfalls eine gewisse Reinigung des Bandes oder dgl. erfolgen kann, wird durch diese Ausbildung der erfindungsgemäßen Schmiereinrichtung jedoch auch fest ansitzender Schmutz zuverlässig von dem Band entfernt. Der Schmierstoff wird dann auf das bereits gesäuberte Band oder dgl. aufgetragen, so dass die Schmierstellen des Bandes direkt benetzt werden und nicht eine die Schmierstellen überdeckende Schmutzschicht.

Die Versorgung des wenigstens einen Schmierstoffauslasses mit Schmierstoff lässt sich konstruktiv besonders einfach dadurch realisieren, dass in dem Schmierstoffapplikator Kanäle vorgesehen sind, durch die der Schmierstoff von einer Schmierstoffpumpe dem Schmierstoffauslass zugeleitet wird.

Vorzugsweise sind in der Schmiereinrichtung mehrere Schmierstoffauslässe vorgesehen, wobei der Schmierstoffpumpe über einen Progressiv-Verteiler den Schmierstoffauslässen zugeteilt wird. Durch den Einsatz eines Progressiv-Verteilers ist eine besonders exakte Zudosierung von Schmierstoff zu jedem der Schmierstoffauslässe möglich.

Der wenigstens eine Schmierstoffauslass mündet vorzugsweise in Bandlaufrichtung vorne in den Führungskanal, damit ein optimales Eindringen des Schmierstoffs in das Band oder dgl. in dem geführten Bereich stattfindet.

Herstellungstechnisch von Vorteil ist es ferner, wenn der Schmierstoffapplikator und/oder die Bandführungseinrichtung jeweils als Formteil ausgebildet sind/ist.

In Weiterbildung des Erfindungsgedankens können/kann der Schmierstoffapplikator und/oder die Bandführungseinrichtung durch Befestigungselemente, wie Winkel, in horizontaler und/oder in vertikaler Richtung verstellbar verschieblich gelagert sind. Mit diesen Befestigungselementen lässt sich die Schmiereinrichtung in beliebigen Anlagen befestigen, wobei durch die Verschiebbarkeit in horizontaler und/oder vertikaler Richtung eine individuelle Ausrichtung der Schmiereinrichtung innerhalb der Anlage möglich ist.

Im Folgenden wird die Erfindung unter Bezugnahme auf ein Ausführungsbeispiel anhand der Zeichnung erläutert.

Es zeigen:
- Fig. 1: eine schematische Seitenansicht der erfindungsgemäßen Schmiereinrichtung und
- Fig. 2: eine schematische Ansicht der Schmiereinrichtung nach Fig. 1 gesehen in Bewegungsrichtung der Schmierstellen.

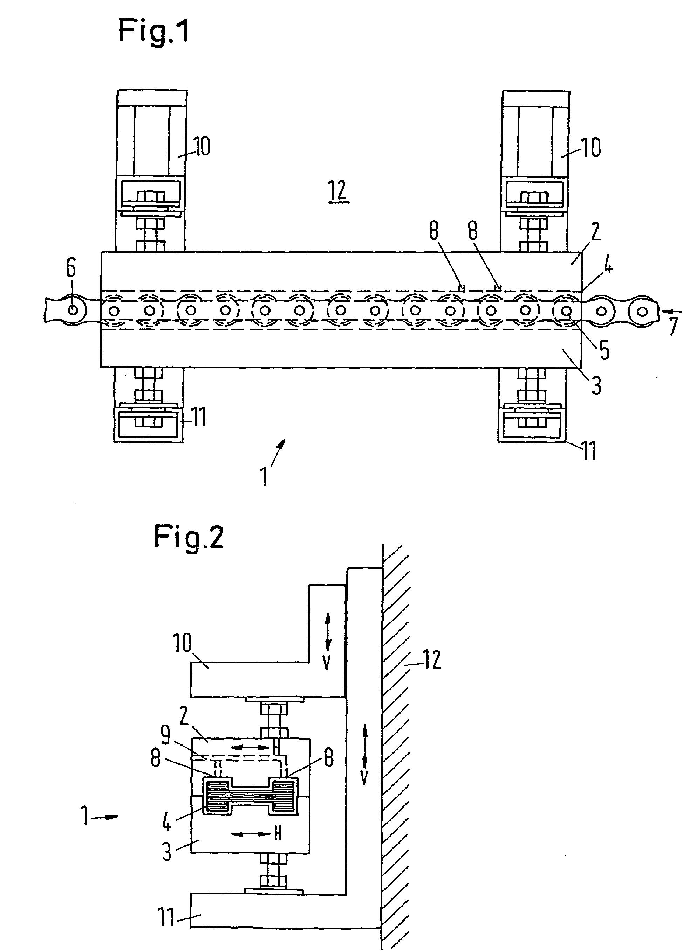

Die in den Figuren dargestellte Schmiereinrichtung 1 besteht im Wesentlichen aus einem Schmierstoffapplikator 2 und einer Bandführungseinrichtung 3. Der Schmierstoffapplikator 2 und die Bandführungseinrichtung 3, welche beide als Formteil ausgebildet sind, umschließen einen in Fig. 2 H-förmigen Führungskanal 4, in dem, wie in Fig. 1 angedeutet, ein Band 5, wie beispielsweise eine Kette, mit einer Spielpassung im Sinne einer Zwangsführung geführt ist. Der Querschnitt hängt jeweils von dem Kettentyp nach DIN 8187 ab.

Das Band 5 weist mehrere Schmierstellen 6, nämlich z.B. die Laschen-Laschen-Paarungen sowie die Laschen-Rollen-Paarungen, auf, welche sich mit dem Band 5, wie durch Pfeil 7 in Fig. 1 angedeutet, bewegen. Den Schmierstellen 6 zugeordnet befinden sich in dem Schmierstoffapplikator 2 mehrere Schmierstoffauslässe 8, so dass der Schmierstoffapplikator 2 als Kontaktschmiereinheit ausgebildet ist. Die Schmierstoffauslässe 8 sind mit in dem Schmierstoffapplikator 2 verlaufenden Kanälen 9 verbunden, die wiederum über einen nicht dargestellen Progressiv-Verteiler von einer Schmierstoffpumpe mit Schmierstoff versorgt werden.

Der Schmierstoffapplikator 2 und die Bandführungseinrichtung 3 sind jeweils über Winkel 10, 11 an einer in Fig. 2 mit Bezugsziffer 12 gekennzeichneten Anlage festlegbar. Der Schmierstoffapplikator 2 sowie die Bandführungseinrichtung 3 sind dabei relativ zu den Winkeln 10, 11, wie in Fig. 2 durch die Doppelpfeile angedeutet, in horizontaler Richtung H feststellbar verschieblich gelagert. Gleichzeitig sind die Winkel 10 und 11 selbst, wie durch die Doppelpfeile V in Fig. 2 dargestellt, gegenüber der Anlage 12 in vertikaler feststellbar verschieblich.

Die Schmiereinrichtung ermöglicht gleichzeitig die Versorgung des Bandes 5 mit Schmierstoff und die Reinigung des Bandes 5. Da der Führungskanal 4 der Geometrie des Bandes 5 angepasst und dieses mit einer Spielpassung in dem Führungskanal 4 geführt ist, wird an dem Band 5 anhaftender Schmutz durch die Bewegung des Bandes 5 in Richtung des Pfeiles 7 auf der in Fig. 1 rechten Seite durch den Schmierstoffapplikator 2 sowie die Bandführungseinrichtung 3 abgestreift. Mit dem Eintritt in den Führungskanal 4 wird das Band 5 auf diese Weise kontinuierlich gereinigt.

Die Schmierstoffauslässe 8 sind auf der in Fig. 1 rechten, in Bandlaufrichtung vorne gelegenen Seite des Führungskanals 4 angeordnet, so dass das Band 5 nach dem Schmierstoffauftrag weiter in dem Führungskanal 4 geführt wird. Auf diese Weise ist eine Benetzung der Schmierstellen 6 mit Schmierstoff in dem Führungskanal 4 möglich, wobei ein ungewolltes Abstreifen oder Wegschleudern von Schmierstoff von dem Band 5 und den Schmierstellen 6 beispielsweise im Anfahrbetrieb bzw. bei Geschwindigkeitsänderungen durch "Schlagen" des Bandes 5 vermieden wird.

Durch die horizontal und vertikal verschiebliche Lagerung des Schmierstoffapplikators 2 und der Bandführungseinrichtung 3 in den Winkeln 10 und 11 ist eine genaue Anpassung der Lage des Führungskanals 4 innerhalb einer Anlage 12 möglich.

Der Verschleiß des Schmierstoffapplikators 2 sowie der Bandführungseinrichtung 3 wird dadurch minimiert, dass diese Bauteile aus einem hochverschleißfesten Kunststoff bestehen oder mit diesem wenigstens beschichtet sind. Auf diese Weise werden die Standzeiten der gesamten Schmiereinrichtungen deutlich verlängert.

### Bezugszeichen:

- 1: Schmiereinrichtung
- 2: Schmierstoffapplikator
- 3: Bandführungseinrichtung
- 4: Führungskanal
- 5: Band oder dgl.
- 6: Schmierstelle
- 7: Bewegungsrichtung des Bandes 5
- 8: Schmierstoffauslass (Kontaktschmiereinheit)
- 9: Kanal
- 10: Winkel
- 11: Winkel
- 12: Anlage

- H: Horizontalverschiebung
- V: Vertikalverschiebung

## Patentansprüche

1. Schmiereinrichtung zum Abschmieren wandernder Schmierstellen (6), wie solchen an einem Band (5) oder dergleichen, insbesondere an einem Rollen- oder Kettenband (5), mit einem Schmierstoffapplikator (2), der wenigstens einen Schmierstoffauslass (8) aufweist, und einer dem Schmierstoffapplikator (2) zugeordneten Bandführungseinrichtung (3), durch welche das Band (5) oder dgl. während des Schmiervorgangs geführt wird, wobei der wenigstens einen Schmierstoffauslass (8) aufweisende Schmierstoffapplikator (2) als Kontaktschmiereinheit ausgebildet ist, **dadurch gekennzeichnet, dass** der Schmierstoffapplikator (2) und die Bandführungseinrichtung (3) einen sich in Längsrichtung der Schmierstellenbewegung erstreckenden Führungskanal (4) definieren, dessen Querschnitt an die Geometrie des Bandes (5) derart angepasst ist, dass an dem Band (5) anhaftender Schmutz beim Eintritt des Bandes (5) in den Führungskanal (4) abgestreift wird, wobei das Band (5) mit einer Spielpassung in dem Führungskanal (4) geführt ist, und dass der Schmierstoffapplikator (2) und/oder die Bandführungseinrichtung (3) aus einem hochverschleißfesten Kunststoff bestehen oder wenigstens an ihren mit dem Band (5) oder dgl. in Kontakt tretenden Bereichen mit einem hochverschleißfesten Kunststoff beschichtet sind.

2. Schmiereinrichtung nach Anspruch 1, **dadurch gekennzeichnet, dass** in dem Schmierstoffapplikator (2) Kanäle (9) vorgesehen sind, durch die der Schmierstoff von einer Schmierstoffpumpe dem wenigstens einen Schmierstoffauslass (8) zugeleitet wird.

3. Schmiereinrichtung nach Anspruch 2, **dadurch gekennzeichnet, dass** der Schmierstoff von der Schmierstoffpumpe über einen Progressiv-Verteiler mehreren Schmierstoffauslässen (8) zugeteilt wird.

4. Schmiereinrichtung nach einem der vorhergehenden Ansprüche, **dadurch gekennzeichnet, dass** der wenigstens eine Schmierstoffauslass (8) in Bandlaufrichtung vorne in den Führungskanal (4) mündet.

5. Schmiereinrichtung nach einem der vorhergehenden Ansprüche, **dadurch gekennzeichnet, dass** der Schmierstoffapplikator (2) und/oder die Bandführungseinrichtung (3) jeweils als Formteile ausgebildet sind/ist.

6. Schmiereinrichtung nach einem der vorhergehenden Ansprüche, **dadurch gekennzeichnet, dass** der Schmierstoffapplikator (2) und/oder die Bandführungseinrichtung (3) über Befestigungselemente (10, 11), wie Winkel (10, 11), in horizontaler und/oder in vertikaler Richtung feststellbar verschieblich gelagert sind.

## Claims

1. Lubrication device for lubricating traveling lubrication sites (6), such as those on a belt (5) or the like, in particular on a roller or chain belt (5), with a lubricant applicator (2), which comprises at least one lubricant outlet (8), and a belt guidance device (3) associated with the lubricant applicator (2), by which the belt (5) or the like is guided during the lubrication process, whereby the lubricant applicator (2) comprising at least one lubricant outlet (8) is developed as a contact lubrication unit, **characterized in that** the lubricant applicator (2) and the belt guidance device (3) define a guidance channel (4) extending in the longitudinal direction of the lubrication site movement, the cross section of which is adapted to the geometry of the belt (5) such that dirt adhering on the belt (5) is stripped when the belt (5) enters into the guidance channel (4), whereby the belt (5) is guided in the guidance channel (4) with clearance fit, and that the lubrication applicator (2) and/or the belt guidance device (3) are comprised of a highly wear-resistant synthetic material or are coated with a highly wear-resistant synthetic material at least on their regions coming into contact with the belt (5) or the like.

2. Lubrication device according to claim 1, **characterized in that** in the lubrication applicator (2) channels (9) are provided, through which the lubricant is fed by a lubricant pump to the at least one lubricant outlet (8).

3. Lubrication device according to claim 2, **characterized in that** the lubricant is allocated by the lubricant pump to several lubricant outlets (8) via a progressive distributor.

4. Lubrication device according to one of the preceding claims, **characterized in that** the at least one lubricant outlet (8) terminates, with respect to the moving direction of the belt, in front into the guidance channel (4).

5. Lubrication device according to one of the preceding claims, **characterized in that** the lubricant applicator (2) and/or the belt guidance device (3) are each developed as moulded parts.

6. Lubrication device according to one of the preceding claims, **characterized in that** the lubricant applicator (2) and/or the belt guidance device (3) are supported via fastening elements (10, 11) such as angles (10, 11), such that they are settable in position by displacement in the horizontal and/or vertical direction.

## Revendications

1. Dispositif de lubrification pour la lubrification de points de lubrification mobiles (6), tels ceux placés sur une bande (5) ou un appareil semblable, notamment sur une bande à rouleaux ou à chaînes (5), lequel dispositif est muni d'un applicateur de lubrifiant (2) présentant au moins une sortie de lubrifiant (8), et d'un dispositif de guidage de bande (3) attribué à l'applicateur de lubrifiant (2) avec lequel la bande (5) ou l'appareil semblable est guidé durant la procédure de lubrification, l'applicateur de lubrifiant (2) muni d'au moins une sortie de lubrifiant (8) étant conçu sous la forme d'une unité de lubrification à contact, **caractérisé en ce que** l'applicateur de lubrifiant (2) et le dispositif de guidage de bande (3) définissent un canal de guidage (4) s'étendant dans la direction longitudinale du mouvement des points de lubrification, la section transversale duquel canal étant adaptée à la géométrie de la bande (5) de telle sorte que des salissures collant à la bande (5) sont raclées lors de l'entrée de la bande (5) dans le canal de guidage (4), la bande (5) étant guidée dans le canal de guidage (49) avec un ajustement avec jeu, et **en ce que** l'applicateur de lubrifiant (2) et/ou le dispositif de guidage de bande (3) sont fabriqués dans une matière plastique hautement résistante à l'usure ou au moins leurs zones entrant en contact avec la bande (5) ou l'appareil semblable sont revêtues d'une matière plastique hautement résistante à l'usure.

2. Dispositif de lubrification selon la revendication 1, **caractérisé en ce qu'**il est prévu dans l'applicateur de lubrifiant (2) des canaux (9) à travers lesquels le lubrifiant est conduit à l'au moins une sortie de lubrifiant (8) par une pompe à lubrifiant.

3. Dispositif de lubrification selon la revendication 2, **caractérisé en ce que** le lubrifiant est distribué à plusieurs sorties de lubrifiant (8) depuis la pompe à lubrifiant en passant par un distributeur progressif.

4. Dispositif de lubrification selon l'une des revendications précédentes, **caractérisé en ce que** la au moins une sortie de lubrifiant (8) débouche à l'avant, dans la direction de déplacement de la bande, dans le canal de guidage (4).

5. Dispositif de lubrification selon l'une des revendications précédentes, **caractérisé en ce que** l'applicateur de lubrifiant (2) et/ou le dispositif de guidage de la bande (3) sont conçus chacun comme un élément tridimensionnel.

6. Dispositif de lubrification selon l'une des revendications précédentes, **caractérisé en ce que** l'applicateur de lubrifiant (2) et/ou le dispositif de guidage de bande (3) sont logés coulissants en pouvant être fixés en direction horizontale et/ou verticale.
